# EUROPEAN PATENT SPECIFICATION

(11) **EP 4 124 573 B1**
(45) Date of publication and mention of the grant of the patent: **18.06.2025**
(21) Application number: 21188523.1
(22) Date of filing: 29.07.2021
(51) Int. Cl.: B64D 15/00, B64D 15/20, F28D 20/02, C09K 5/06, C09K 3/18, B64D 33/02

(54) **ICE PROTECTION SYSTEM AND METHOD FOR AN AIRCRAFT COMPONENT, AIRCRAFT COMPO-NENT AND AIRCRAFT USING SUCH A SYSTEM**
EISSCHUTZSYSTEM UND VERFAHREN FÜR EINE FLUGZEUGKOMPONENTE, FLUGZEUGKOMPONENTE UND FLUGZEUG MIT SOLCH EINEM SYSTEM
SYSTÈME ET PROCÉDÉ DE PROTECTION CONTRE LA GLACE POUR UN COMPOSANT D'AÉRONEF, COMPOSANT D'AÉRONEF ET AÉRONEF UTILISANT UN TEL SYSTÈME

(43) Date of publication of application: 01.02.2023
(73) Proprietor: Airbus Defence and Space GmbH, 82024 Taufkirchen (DE); AIRBUS OPERATIONS (S.A.S.), 31060 Toulouse (FR); AIRBUS HELICOPTERS, 13725 Marignane Cedex (FR); Airbus Defence and Space SA, 28906 Getafe Madrid (ES)
(72) Inventor: BONACCURSO, Elmar, 82024 Taufkirchen (DE); VERCILLO, Vittorio, 82024 Taufkirchen (DE); CARUHEL, Camille, 31060 Toulouse (FR); DEZITTER, Fabien, 13725 Cedex (FR); HUET, Florent, 13725 Cedex (FR); BLAZQUEZ MUNOZ, Pablo, 28906 Madrid (ES); DIAZ BARJA, Miguel, 28906 Madrid (ES)
(74) Representative: KASTEL Patentanwälte PartG mbB

(56) References cited:
- EP-A1- 3 750 810
- WO-A1-2020/180826
- WO-A1-95/34189
- CN-A- 110 963 044
- CN-A- 113 086 163

## Description

The invention relates to an ice protection system configured for an aircraft component of an aircraft. The invention further relates to an aircraft component and aircraft using such a system. The invention also relates to a method for de-icing or preventing ice accretion and a use of phase change material.

Current on-board ice protection systems (IPS) use electrical or thermal energy for preventing ice formation on an aircraft or an aircraft component, or for removing accreted ice from said aircraft or component. Ice can also be removed chemically, using hot de-icing fluids sprayed on the aircraft or aircraft component that have the function of melting the ice and lowering the freezing point of water.

All these solutions consume large amounts of energy or are environmentally difficult.

CN 110 963 044 discloses an anti-icing device for an aircraft with a component including a nano-composite phase change material for absorbing heat above a given temperature, the anti-icing device being configured for releasing the absorbed heat again when the temperature is monitored to be too low.

EP 3 750 810 A1 discloses a heat energy device for an aircraft including a phase change material as heat energy storage medium that is configured for storing heat due to friction on an aircraft structure.

CN 111 086 163 A discloses a deicing device for an aircraft comprising a deicing layer filled with a phase change energy storage material having a phase change temperature that is higher than the freezing point.

WO 2020 / 180 826 A1 discloses a method for processing an aircraft component by applying a phase change material with a melting point between 0°C and 30°C to a surface of the component.

WO 95 / 34189 A1 discloses a de-icing system for an aircraft including a thin sheet of a shape memory allow.

It is the object of the invention to reduce power consumption for de-icing or ice prevention.

The object is achieved by the subject-matter of the independent claims. Preferred embodiments are subject-matter of the dependent claims.

The invention provides an ice protection system configured for an aircraft component of an aircraft, wherein the ice protection system includes a phase change material that is configured for storing thermal energy by undergoing a phase transition, when the temperature of the phase change material goes above a first temperature, and for releasing previously stored thermal energy by undergoing another phase transition, when the temperature of the phase change material goes below a second temperature that is lower than the first temperature.

Preferably, the ice protection system further comprises a trigger device that is configured to initiate phase change within the phase change material. Preferably, the trigger device includes an electrically conductive wiring that is operatively coupled to the phase change material. Preferably, the trigger device includes an electromagnet that is arranged adjacent or within the phase change material. Preferably, the trigger device includes a light source that is arranged to irradiate the phase change material.

Preferably, the ice protection system further comprises an ice detection system that is configured to detect accretion of ice on the aircraft component and that is operatively coupled to the phase change material, so as to initiate a phase change upon detection of accretion of ice.

Preferably, the phase change material is configured to undergo a volume change upon undergoing a phase change, so as to generate interfacial stress for delaminating ice from the aircraft component.

Preferably, the ice protection system further comprises a thermally conducting cover layer that is arranged to cover the phase change material and that is configured to thermally conduct the thermal energy to be stored and released by the phase change material from the phase change material to its surface.

Preferably, the first temperature is from 5 °C to 40 °C. Preferably, the first temperature is from 5 °C to 30 °C. Preferably, the first temperature is from 10 °C to 40 °C. Preferably, the first temperature is from 10 °C to 30 °C. Preferably, the first temperature is from 20 °C to 30 °C. Preferably, the first temperature is from 24 °C to 26 °C. Preferably, the first temperature is 25 °C.

Preferably, the second temperature is from above -10 °C to below +5 °C. Preferably, the second temperature is from above -10 °C to below +2 °C. Preferably, the second temperature is from above -10 °C to below -2 °C. Preferably, the second temperature is from above -5 °C to below +5 °C. Preferably, the second temperature is from above -5 °C to below +2 °C. Preferably, the second temperature is from above -5 °C to below -2°C. Preferably, the second temperature is from above 0 °C to below 5 °C. Preferably, the second temperature is from above 0 °C to below 2 °C. Preferably, the second temperature is below 5 °C. Preferably, the second temperature is below 2 °C. Preferably, the second temperature is below 1 °C. Preferably, the second temperature is below -2 °C.

The invention provides an aircraft component for an aircraft according to claim 8.

Preferably, the aircraft component mainly up to totally consists of the phase change material.

Preferably, the aircraft component is a leading edge portion of a wing of an aircraft, and the exposed surface is arranged on both sides of a stagnation line of the leading edge portion.

Preferably, the aircraft component is a rotor blade of an aircraft, and at least one exposed surface is arranged on one blade of the rotor blade.

Preferably, the aircraft component is an air intake of an aircraft, and the exposed surface is arranged on an inner circumferential surface and/or leading surface of the air intake.

Preferably, the aircraft component is a probe of an aircraft, and the exposed surface is arranged on an outer circumferential surface of the probe.

The invention provides an aircraft according to claim 13.

The invention provides a method for de-icing or preventing ice accretion on an exposed surface of an aircraft component by
- coating the exposed surface with or manufacturing the exposed surface or aircraft component out of a phase change material that is configured for storing thermal energy by undergoing a phase transition, when the temperature of the phase change material goes above a first temperature, and for releasing previously stored thermal energy by undergoing another phase transition, when the temperature of the phase change material goes below a second temperature that is lower than the first temperature; and
- triggering a phase change in the phase change material by exposing the phase change material to different temperatures and/or by activating a trigger device configured for initiating a phase change in the phase change material.

The invention proposes using a phase change material for de-icing an exposed surface of an aircraft component of an aircraft, wherein the phase change material is configured for storing thermal energy by undergoing a phase transition, when the temperature of the phase change material goes above a first temperature, and for releasing previously stored thermal energy by undergoing another phase transition, when the temperature of the phase change material goes below a second temperature that is lower than the first temperature.

The technical field of the invention is ice protection systems and strategies for aircraft of any kind. In inclement weather and specifically icing conditions, (i) some aircraft may be not allowed to take off and fly, (ii) some aircraft are certified for flight in limited icing conditions, and (iii) some aircraft are certified for flight in all icing conditions. In cases (ii) and (iii) the respective aircraft need to have some sort of ice protection strategy or system installed that allows reducing or preventing the risk of icing of aircraft structures like wings, rudder, engine inlets, propellers, air intakes, probes, etc. Active systems are currently used that either shed off the ice mechanically or melt the ice by providing sufficient heat to melt the ice. Such systems need electrical power from power packs, heat generated by the engines, or other on-board power systems.

The solution (Phase Change Materials - PCM) proposed in this disclosure provides heat generated chemically (by a solid-solid or solid-liquid phase change) for ice protection of different aircraft components (like wing leading edges, rotor blades, air intakes, probes, etc.) or aircraft (like small H/C, UAV, drones, or urban air mobility applications).

The PCM can be applied as a coating to the components or products, or it can be a structural element.

Phase Change Materials (PCM) allow a low-power and environmentally friendly solution for some icing conditions. PCM have been investigated as convenient energy storage solutions in aerospace. They allow storing energy at a given temperature - mainly as heat - and releasing this energy again - mainly as heat - at another temperature. The released heat can be used as it is or for powering energy converters and producing electricity. In the frame of the current invention, PCM are used as heat source for thermal ice protection of aircraft components. The components could be made out of the PCM or be coated by a PCM-based coating. The advantages of using PCM for selected components in selected icing conditions are manifold (it should be noted that not all advantages need to be present at the same time): (i) the technical solution does not require wiring or piping systems for conducting electricity or heat from a remote location on the aircraft; (ii) no energy other than that already stored in the PCM is consumed during operation; (iii) the system can be used unlimited times, because the phase change process is reversible; (iv) maintenance is foreseen to be extremely limited (the system is ideally maintenance-free); (v) no emissions are produced during operation and the operation of the PCM is basically CO₂ neutral due to the reversible phase change process.

The invention is about using a class of materials known as Phase Change Materials (PCM) as replacement or in support of current ice protection systems for aircraft components. PCM are able to store energy in chemical form, i.e. as enthalpy of phase transition, at a defined first temperature T1 and release it at a second temperature T2. For the purpose described here, T1 > T2, e.g. T1 = 20 °C and T2 = 0 °C. When the ambient temperature T > T1, the PCM undergoes a phase transition and stores thermal energy from the surroundings. When T < T2, the PCM undergoes another phase transition and releases the stored thermal energy to the surroundings.

This is explained herein with the example of the PCM system Zn(NO3)2·6H2O + Mn(NO3)2·4H2O. It should be noted that there are numerous PCM known that are suitable for the disclosed application, but which are not explicitly listed herein.

One embodiment of the PCM solution is to coat the rotor blade of a drone with a PCM-based coating that can release enough heat to protect the rotor blade from light icing conditions.

Another embodiment of the PCM solution could be to manufacture (e.g., by 3D printing, extruding, or hot embossing) the rotor blades directly from PCM. In this case, the volume of PCM is larger and so also the amount of stored energy. This solution could be used for more severe icing conditions or for ice protection for an extended time.

The simplest case is to have an available PCM that cycles between ~1°C and +25 °C. When the temperature of the PCM decreases below 1°C, the phase change process is triggered and the PCM releases heat. This way, it ideally maintains a constant temperature of 1°C during all the phase change process (can be up to 10 minutes, e.g.), or cools down more slowly than the surroundings during the phase change. The system is "recharged" when its temperature rises above 25°C and the phase change is reversed.

This way, however, the system releases heat only upon trespassing a critical temperature and irrespective of icing conditions or only cold weather conditions occur. One idea is to add an electrical trigger that can kick-off the phase change at any desired time or temperature. The available PCM can then cycle between T_{low} and +25 °C, so that the phase change preferably does not occur in natural flying conditions that are determined by T_{low} and that are different and adjustable for each different aircraft or mission profile. The operator of the aircraft can decide when to turn on the PCM-based ice protection. In another variant a signal is provided by a connected ice detection system.

The ideal PCM is able to store/release a huge heat density [in kJ/kg]. The energy density of the PCM is preferably large enough to be effective for the intended application or for the intended mission.

Some PCMs show a more or less pronounced volume change when they undergo a phase change. Volume change is associated with a surface area change and thus the generation of an interfacial stress, which may cause delamination of accreted ice upon phase change.

In order to improve the energy that is stored in the PCM and ensure sufficient ice protection due to larger amount of heat, preferably, a larger volume of PCM is installed inside the component and coated with a thin protective and thermally conducting paint to transfer the energy to the ice and protect the component from ice accretion.

Embodiments of the invention are described in more detail with reference to the accompanying schematic drawings that are listed below
- Fig. 1: depicts an embodiment of an aircraft;
- Fig. 2: depicts an embodiment of an aircraft component;
- Fig. 3: depicts another embodiment of an aircraft component;
- Fig. 4: depicts yet another embodiment of an aircraft component;
- Fig. 5: depicts a differential scanning calorimetry (DSC) diagram illustrating the phase changes.

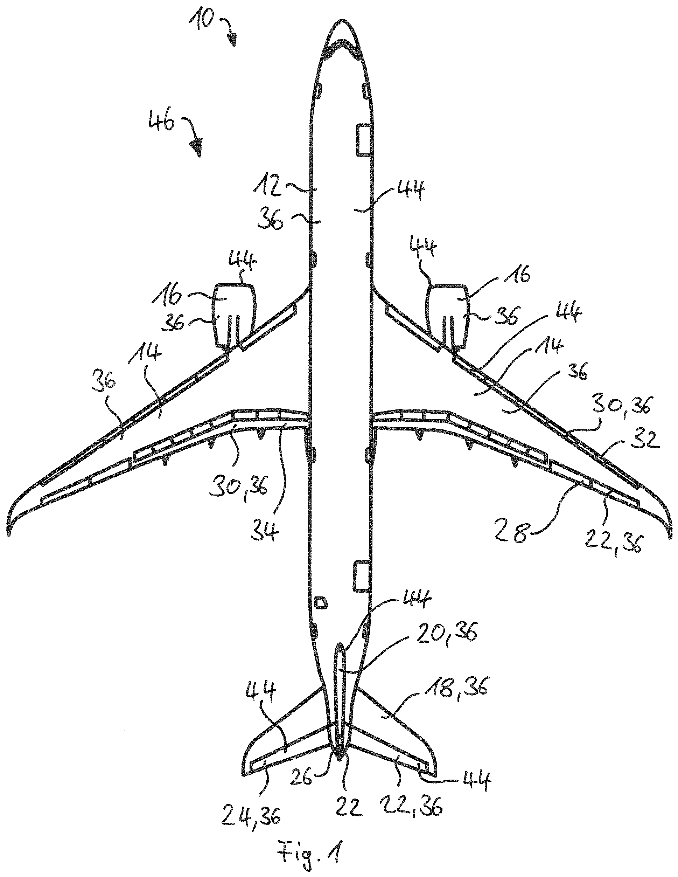

Fig. 1 depicts an embodiment of an aircraft 10. The aircraft 10 has a fuselage 12 and a pair of wings 14 attached thereto. The aircraft 10 further comprises engines 16 for propulsion. The aircraft 10 includes a horizontal tail plane 18 and a vertical tail plane 20. Furthermore, the airplane 10 includes control surfaces 22, such as elevator 24, rudder 26, and ailerons 28. Furthermore, the aircraft 10 includes high-lift devices 30, such as slats 32 and flaps 34. The aforementioned parts are examples of aircraft components 36.

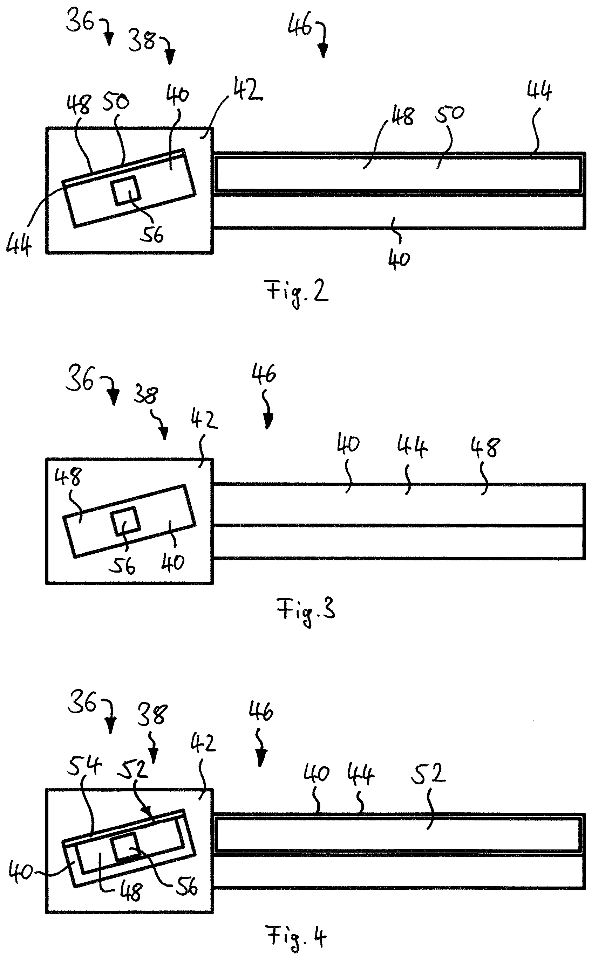

Referring to Fig. 2, a rotor 38 is another example of an aircraft component 36. It should be noted that - while the invention is described for the sake of brevity with respect to the aircraft 10 and the rotor 38, the invention is also applicable to other types of aircraft and other aircraft components.

The rotor 38 has a plurality of rotor blades 40, of which only two are depicted here, and a rotor hub 42. The rotor blades 40 have an exposed surface 44 that is arranged such that ice can accrete during operation. The rotor blade 40 is schematically shown once as a cross-section and once in a side view. The rotor 38 has an ice protection system 46. The ice protection system 46 includes a phase change material 48. The phase change material 48 is arranged on the exposed surface 44 as an anti-ice coating 50.

Fig. 3 depicts a variant of the rotor 38 which is made in its entirety from the phase change material 48. It should be noted that in this case the phase change is a solid-solid phase change.

Fig. 4 depicts a variant of the rotor 38 that has a phase change insert 52 that is integrated into the rotor blades 40. The phase change insert 52 is made of or includes the phase change material. In addition, this rotor 38 also comprises a thermally conducting cover layer 54 that is arranged on the phase change insert 52, so as to protect the phase change insert 52 and allow storing and releasing of thermal energy.

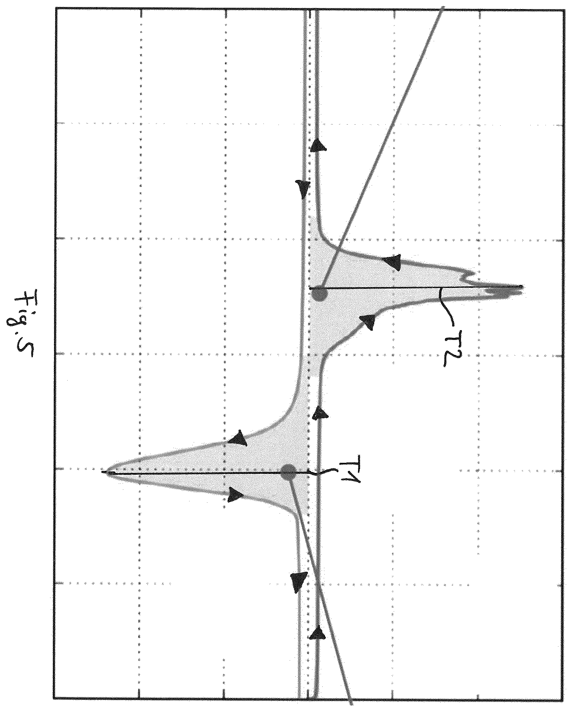

As illustrated in Fig. 5, the phase change material 48 has a first temperature T1 and a second temperature T2. If the temperature of the phase change material 48 exceeds the first temperature T1, the phase change material 48 undergoes a phase change so that thermal energy is stored in the phase change material 48. If the temperature of the phase change material 48 crosses the second temperature T2 from above, then the thermal energy that was previously stored in the phase change material 48 is released. The curves for heating (arrows from left to right) and cooling (arrows from right to left) are offset for better visibility.

Independent of the embodiment, the ice protection system 46 may include an ice detection system (not depicted) that determines whether a formation of ice is taking place. In this case, the ice detection system generates a signal indicative of the ice formation. The signal may be processed by a control unit or the operator of the aircraft 10. In any case, the ice protection system 46 may include a trigger device 56. The trigger device 56 is configured for enabling the phase change material 48 to undergo phase changes. The trigger device 54 may be an electrical wire, an electromagnet or a light source depending on the type of phase change material 48.

In order to reduce power consumption for de-icing or ice prevention, the invention proposes to provide an aircraft component (36) of an aircraft (10) or the aircraft (10) on its exposed surface (44) with a phase change material (48). The phase change material (48) stores thermal energy above a first temperature (T1) and releases the previously stored thermal energy below a second temperature (T2).

### List of reference signs:

- 10: aircraft
- 12: fuselage
- 14: wing
- 16: engine
- 18: horizontal tail plane
- 20: vertical tail plane
- 22: control surface
- 24: elevator
- 26: rudder
- 28: ailerons
- 30: high-lift device
- 32: slat
- 34: flap
- 36: aircraft component
- 38: rotor
- 40: rotor blades
- 42: rotor hub
- 44: exposed surface
- 46: ice protection system
- 48: phase change material
- 50: anti-ice coating
- 52: phase change insert
- 54: thermally conducting cover layer
- 56: trigger device

- T1: first temperature
- T2: second temperature

## Claims

1. An ice protection system (46) configured for an aircraft component (36) of an aircraft (10) or for an aircraft (10), wherein the ice protection system (46) includes a phase change material (48) that is configured for storing thermal energy by undergoing a phase transition, when the temperature of the phase change material (48) goes above a first temperature (T1), and for releasing previously stored thermal energy by undergoing another phase transition, when the temperature of the phase change material (48) goes below a second temperature (T2) that is lower than the first temperature (T1).

2. The ice protection system (46) according claim 1, further comprising a trigger device (56) that is configured to enable phase change within the phase change material (48).

3. The ice protection system (46) according to claim 2, further comprising an ice detection system that is configured to detect accretion of ice on the aircraft component (36) or aircraft (10) and that is operatively coupled to the phase change material (48), so as to initiate a phase change upon detection of accretion of ice.

4. The ice protection system (46) according to any of the preceding claims, wherein the phase change material (48) is configured to undergo a volume change upon undergoing a phase change, so as to generate interfacial stress for delaminating ice from the aircraft component (36) or aircraft (10).

5. The ice protection system (46) according to any of the preceding claims, further comprising a thermally conducting cover layer (54) that is arranged to cover the phase change material (48) and that is configured to thermally conduct the thermal energy to be stored and released by the phase change material (48) from the phase change material (48) to its surface and back.

6. The ice protection system (46) according to any of the preceding claims, wherein the first temperature (T1) is from 5 °C to 40 °C.

7. The ice protection system (46) according to any of the preceding claims, wherein the second temperature (T2) is from above -10 °C to below +5 °C.

8. An aircraft component (36) for an aircraft (10), the aircraft component (36) comprising an ice protection system (46) according to any of the preceding claims and an exposed surface (44) that is exposed such that ice is able to accrete, wherein the phase change material (48) is arranged on the exposed surface (44) or at least the exposed surface (44) is made of the phase change material (48).

9. The aircraft component (36) according to claim 8, wherein the aircraft component (36) is a leading edge portion of a wing (14) of an aircraft (10), and the exposed surface (44) is arranged on both sides of a stagnation line of the leading edge portion, or is a wing (14) and the exposed surface is arranged on the upper and/or lower wing surface.

10. The aircraft component (36) according to claim 8, wherein the aircraft component is a rotor (38) of an aircraft, and at least one exposed surface (44) is arranged on one rotor blade (40).

11. The aircraft component (36) according to claim 8, wherein the aircraft component (36) is an air intake of an aircraft (10), and the exposed surface (44) is arranged on an inner circumferential surface and/or leading surface of the air intake.

12. The aircraft component (36) according to claim 8, wherein the aircraft component (36) is a probe of an aircraft (10), and the exposed surface is arranged on an outer circumferential surface of the probe.

13. An aircraft (10) comprising an ice protection system (46) according to any of the claims 1 to 7 and/or an aircraft component (36) according to any of the claims 8 to 12.

14. A method for de-icing or preventing ice accretion on an exposed surface (44) of an aircraft component (36) or of an aircraft (10) by
- coating the exposed surface (44) with or manufacturing the exposed surface (44) or aircraft component (36) out of a phase change material (48) that is configured for storing thermal energy by undergoing a phase transition, when the temperature of the phase change material (48) goes above a first temperature (T1), and for releasing previously stored thermal energy by undergoing another phase transition, when the temperature of the phase change material (48) goes below a second temperature (T2)
that is lower than the first temperature (T1); and
- triggering a phase change in the phase change material (48) by exposing the phase change material (48) to different temperatures and/or by activating a trigger device (56) configured for initiating a phase change in the phase change material (48).

15. Using a phase change material (48) for de-icing an exposed surface (44) of an aircraft component (36) of an aircraft (10) or an aircraft (10), wherein the phase change material (48) is configured for storing thermal energy by undergoing a phase transition, when the temperature of the phase change material (48) goes above a first temperature (T1), and for releasing previously stored thermal energy by undergoing another phase transition, when the temperature of the phase change material (48) goes below a second temperature (T2) that is lower than the first temperature (T1).

## Patentansprüche

1. Eisschutzsystem (46), das für eine Luftfahrzeugkomponente (36) eines Luftfahrzeugs (10) oder für ein Luftfahrzeug (10) konfiguriert ist, wobei das Eisschutzsystem (46) ein Phasenwechselmaterial (48) enthält, das konfiguriert ist zum Speichern von Wärmeenergie, indem es einem Phasenübergang unterzogen wird, wenn die Temperatur des Phasenwechselmaterials (48) über eine erste Temperatur (T1) geht, und zum Freigeben zuvor gespeicherter Wärmeenergie, indem es einem weiteren Phasenübergang unterzogen wird, wenn die Temperatur des Phasenwechselmaterials (48) unter eine zweite Temperatur (T2) geht, die niedriger als die erste Temperatur (T1) ist.

2. Eisschutzsystem (46) nach Anspruch 1, das ferner eine Auslösevorrichtung (56) umfasst, die konfiguriert ist, einen Phasenwechsel im Phasenwechselmaterial (48) zu aktivieren.

3. Eisschutzsystem (46) nach Anspruch 2, das ferner ein Eisdetektionssystem umfasst, das konfiguriert ist, eine Ablagerung von Eis an der Luftfahrzeugkomponente (36) oder dem Luftfahrzeug (10) zu detektieren, und das an das Phasenwechselmaterial (48) funktionstechnisch gekoppelt ist, um nach einer Detektion einer Ablagerung von Eis einen Phasenwechsel zu initiieren.

4. Eisschutzsystem (46) nach einem der vorhergehenden Ansprüche, wobei das Phasenwechselmaterial (48) konfiguriert ist, einem Volumenwechsel unterzogen zu werden, nachdem es einem Phasenwechsel unterzogen worden ist, um eine Grenzflächenbeanspruchung zum Delaminieren von Eis von der Luftfahrzeugkomponente (36) oder dem Luftfahrzeug (10) zu erzeugen.

5. Eisschutzsystem (46) nach einem der vorhergehenden Ansprüche, das ferner eine wärmeleitende Abdeckschicht (54) umfasst, die derart angeordnet ist, dass sie das Phasenwechselmaterial (48) abdeckt, und die konfiguriert ist, die Wärmeenergie, die durch das Phasenwechselmaterial (48) gespeichert und freigegeben werden soll, vom Phasenwechselmaterial (48) zu ihrer Oberfläche und zurück thermisch zu leiten.

6. Eisschutzsystem (46) nach einem der vorhergehenden Ansprüche, wobei die erste Temperatur (T1) im Bereich von 5 °C bis 40 °C liegt.

7. Eisschutzsystem (46) nach einem der vorhergehenden Ansprüche, wobei die zweite Temperatur (T2) im Bereich von -10 °C bis +5 °C liegt.

8. Luftfahrzeugkomponente (36) für ein Luftfahrzeug (10), wobei die Luftfahrzeugkomponente (36) ein Eisschutzsystem (46) nach einem der vorhergehenden Ansprüche und eine freiliegende Oberfläche (44), die derart freiliegt, dass sich Eis ablagern kann, umfasst, wobei das Phasenwechselmaterial (48) an der freiliegenden Oberfläche (44) angeordnet ist oder mindestens die freiliegende Oberfläche (44) aus dem Phasenwechselmaterial (48) hergestellt ist.

9. Luftfahrzeugkomponente (36) nach Anspruch 8, wobei die Luftfahrzeugkomponente (36) ein Vorderkantenabschnitt eines Flügels (14) eines Luftfahrzeugs (10) ist und die freiliegende Oberfläche (44) auf beiden Seiten einer Stagnationslinie des Vorderkantenabschnitts angeordnet ist oder ein Flügel (14) ist und die freiliegende Oberfläche an der oberen und/oder der unteren Flügeloberfläche angeordnet ist.

10. Luftfahrzeugkomponente (36) nach Anspruch 8, wobei die Luftfahrzeugkomponente ein Rotor (38) eines Luftfahrzeugs ist und mindestens eine freiliegende Oberfläche (44) an einem Rotorblatt (40) angeordnet ist.

11. Luftfahrzeugkomponente (36) nach Anspruch 8, wobei die Luftfahrzeugkomponente (36) ein Lufteinlass eines Luftfahrzeugs (10) ist und die freiliegende Oberfläche (44) an einer Innenumfangsoberfläche und/oder einer vorderen Oberfläche des Lufteinlasses angeordnet ist.

12. Luftfahrzeugkomponente (36) nach Anspruch 8, wobei die Luftfahrzeugkomponente (36) eine Sonde eines Luftfahrzeugs (10) ist und die freiliegende Oberfläche an einer Außenumfangsoberfläche der Sonde angeordnet ist.

13. Luftfahrzeug (10), das ein Eisschutzsystem (46) nach einem der Ansprüche 1 bis 7 und/oder eine Luftfahrzeugkomponente (36) nach einem der Ansprüche 8 bis 12 umfasst.

14. Verfahren zum Enteisen oder Verhindern einer Eisablagerung an einer freiliegenden Oberfläche (44) einer Luftfahrzeugkomponente (36) oder eines Luftfahrzeugs (10) durch
- Beschichten der freiliegenden Oberfläche (44) mit oder Herstellen der freiliegenden Oberfläche (44) oder der Luftfahrzeugkomponente (36) aus einem Phasenwechselmaterial (48), das konfiguriert ist zum Speichern von Wärmeenergie, indem es einem Phasenübergang unterzogen wird, wenn die Temperatur des Phasenwechselmaterials (48) über eine erste Temperatur (T1) geht, und zum Freigeben zuvor gespeicherter Wärmeenergie, indem es einem weiteren Phasenübergang unterzogen wird, wenn die Temperatur des Phasenwechselmaterials (48) unter eine zweite Temperatur (T2) geht, die niedriger als die erste Temperatur (T1) ist; und
- Auslösen eines Phasenwechsels des Phasenwechselmaterials (48), indem das Phasenwechselmaterial (48) verschiedenen Temperaturen ausgesetzt wird und/oder indem eine Auslösevorrichtung (56) aktiviert wird, die zum Initiieren eines Phasenwechsels des Phasenwechselmaterials (48) konfiguriert ist.

15. Verwenden eines Phasenwechselmaterials (48) zum Enteisen einer freiliegenden Oberfläche (44) einer Luftfahrzeugkomponente (36) eines Luftfahrzeugs (10) oder eines Luftfahrzeugs (10), wobei das Phasenwechselmaterial (48) zum Speichern von Wärmeenergie, indem es einem Phasenübergang unterzogen wird, wenn die Temperatur des Phasenwechselmaterials (48) über eine erste Temperatur (T1) geht, und zum Freigeben zuvor gespeicherter Wärmeenergie, indem es einem weiteren Phasenübergang unterzogen wird, wenn die Temperatur des Phasenwechselmaterials (48) unter eine zweite Temperatur (T2) geht, die niedriger als die erste Temperatur (T1) ist, konfiguriert ist.

## Revendications

1. Système (46) de protection contre le givre pour un composant (36) d'aéronef d'un aéronef (10) ou pour un aéronef (10), le système (46) de protection contre le givre comportant un matériau à changement de phase (48) qui est configuré pour stocker de l'énergie thermique en subissant une transition de phase, lorsque la température du matériau à changement de phase (48) passe au-dessus d'une première température (T1), et pour libérer de l'énergie thermique précédemment stockée en subissant une autre transition de phase, lorsque la température du matériau à changement de phase (48) passe au-dessous d'une deuxième température (T2) qui est plus basse que la première température (T1).

2. Système (46) de protection contre le givre selon la revendication 1, comprenant en outre un dispositif déclencheur (56) qui est configuré pour permettre un changement de phase au sein du matériau à changement de phase (48).

3. Système (46) de protection contre le givre selon la revendication 2, comprenant en outre un système de détection de givre qui est configuré pour détecter une accrétion de givre sur le composant (36) d'aéronef ou l'aéronef (10) et qui est couplé fonctionnellement au matériau à changement de phase (48), de manière à amorcer un changement de phase lors de la détection d'une accrétion de givre.

4. Système (46) de protection contre le givre selon l'une quelconque des revendications précédentes, le matériau à changement de phase (48) étant configuré pour subir un changement de volume lorsqu'il subit un changement de phase, de manière à générer une contrainte dans l'interface destinée à décoller le givre du composant (36) d'aéronef ou de l'aéronef (10).

5. Système (46) de protection contre le givre selon l'une quelconque des revendications précédentes, comprenant en outre une couche de couverture thermiquement conductrice (54) qui est agencée de manière à couvrir le matériau à changement de phase (48) et qui est configurée pour conduire thermiquement l'énergie thermique à stocker et libérer par le matériau à changement de phase (48) depuis le matériau à changement de phase (48) vers sa surface et inversement.

6. Système (46) de protection contre le givre selon l'une quelconque des revendications précédentes, la première température (T1) étant comprise entre 5 °C et 40 °C.

7. Système (46) de protection contre le givre selon l'une quelconque des revendications précédentes, la deuxième température (T2) étant supérieure à -10 °C et inférieure à +5 °C.

8. Composant (36) d'aéronef pour un aéronef (10), le composant (36) d'aéronef comprenant un système (46) de protection contre le givre selon l'une quelconque des revendications précédentes et une surface exposée (44) qui est exposée de sorte à permettre une accrétion de givre, le matériau à changement de phase (48) étant agencé sur la surface exposée (44) ou tout au moins la surface exposée (44) étant composée du matériau à changement de phase (48).

9. Composant (36) d'aéronef selon la revendication 8, le composant d'aéronef (36) étant une partie formant bord d'attaque d'une aile (14) d'un aéronef (10), et la surface exposée (44) étant agencée des deux côtés d'une ligne d'arrêt de la partie formant bord d'attaque, ou étant une aile (14) et la surface exposée étant agencée sur la surface supérieure et/ou inférieure de l'aile.

10. Composant (36) d'aéronef selon la revendication 8, le composant d'aéronef étant un rotor (38) d'un aéronef, et au moins une surface exposée (44) étant agencée sur une pale (40) du rotor.

11. Composant (36) d'aéronef selon la revendication 8, le composant (36) d'aéronef étant une entrée d'air d'un aéronef (10), et la surface exposée (44) étant agencée sur une surface circonférentielle intérieure et/ou une surface avant de l'entrée d'air.

12. Composant (36) d'aéronef selon la revendication 8, le composant (36) d'aéronef étant une sonde d'un aéronef (10), et la surface exposée étant agencée sur une surface circonférentielle extérieure de la sonde.

13. Aéronef (10), comprenant un système (46) de protection contre le givre selon l'une quelconque des revendications 1 à 7 et/ou un composant (36) d'aéronef selon l'une quelconque des revendications 8 à 12.

14. Procédé de dégivrage ou d'empêchement d'une accrétion de givre sur une surface exposée (44) d'un composant (36) d'aéronef ou d'un aéronef (10) par
- revêtement de la surface exposée (44) par un, ou fabrication de la surface exposée (44) ou du composant (36) d'aéronef à partir d'un, matériau à changement de phase (48) qui est configuré pour stocker de l'énergie thermique en subissant une transition de phase, lorsque la température du matériau à changement de phase (48) passe au-dessus d'une première température (T1), et pour libérer de l'énergie thermique précédemment stockée en subissant une autre transition de phase, lorsque la température du matériau à changement de phase (48) passe au-dessous d'une deuxième température (T2) qui est plus basse que la première température (T1) ; et
- déclenchement d'un changement de phase dans le matériau à changement de phase (48) par exposition du matériau à changement de phase (48) à des températures différentes et/ou par activation d'un dispositif déclencheur (56) configuré pour amorcer un changement de phase dans le matériau à changement de phase (48).

15. Utilisation d'un matériau à changement de phase (48) pour dégivrer une surface exposée (44) d'un composant (36) d'aéronef d'un aéronef (10) ou d'un aéronef (10), le matériau à changement de phase (48) étant configuré pour stocker de l'énergie thermique en subissant une transition de phase, lorsque la température du matériau à changement de phase (48) passe au-dessus d'une première température (T1), et pour libérer de l'énergie thermique précédemment stockée en subissant une autre transition de phase, lorsque la température du matériau à changement de phase (48) passe au-dessous d'une deuxième température (T2) qui est plus basse que la première température (T1).
